# EUROPÄISCHE PATENTSCHRIFT

(11) **EP 2 172 756 B1**
(45) Veröffentlichungstag und Bekanntmachung des Hinweises auf die Patenterteilung: **25.01.2017**
(21) Anmeldenummer: 09169135.2
(22) Anmeldetag: 01.09.2009
(51) Int. Cl.: G01K 7/01, G01K 15/00

(54) **Verfahren und Vorrichtung zur Erfassung der Temperatur einer integrierten Schaltung mittels einer auf einem gemeinsamen Substrat untergebrachten kalibrierbaren Temperaturerfassungseinrichtung**
Method and device for recording the temperature of an integrated switch with a calibratable temperature recording device on a shared substrate
Procédé et dispositif de détermination de la température d'une circuit intégré à l'aide d'un dispositif de détermination de la température pouvant être calibré installé sur un substrat commun

(30) Priorität: 02.10.2008 DE 102008042553
(43) Veröffentlichungstag der Anmeldung: 07.04.2010
(73) Patentinhaber: Robert Bosch GmbH, 70442 Stuttgart (DE)
(72) Erfinder: Walter, Thomas, 71272, Renningen (DE); Klar, Michael, 71106, Magstadt (DE); Binzer, Thomas, 70565, Stuttgart (DE); Miosga, Klaus-Dieter, 71522, Backnang (DE); Brueggemann, Oliver, 75248, Oelbronn-Duerrn (DE); Steinbuch, Dirk, 71299, Wimsheim (DE); Seiz, Juergen, 73642, Welzheim (DE)

(56) Entgegenhaltungen:
- WO-A1-01/18512
- DE-A1- 19 839 979
- US-A1- 2004 071 183
- US-A1- 2008 061 865

## Beschreibung

### STAND DER TECHNIK

Die vorliegende Erfindung betrifft ein Verfahren und eine Vorrichtung zur Erfassung der Temperatur einer integrierten Schaltung mittels einer auf einem gemeinsamen Substrat untergebrachten kalibrierbaren Temperaturerfassungseinrichtung.

Obwohl auf beliebige integrierte Schaltungen anwendbar, werden die vorliegende Erfindung und die ihr zugrundeliegende Problematik im Hinblick auf einen Einsatz in MMICs (microwave monolithic integrated circuits) zur Verwendung in Radarsensoren für Automobile erläutert.

Seit ungefähr zehn Jahren werden industriell Radarsensoren für Automobilanwendungen hergestellt. Die ersten Implementierungen bedienten sich diskreter Halbleiter-Bauelemente, um die Hochfrequenz bei typischerweise 77 GHz zu erzeugen bzw. in auswertwertbare Signale umzuwandeln.

Seit einigen Jahren haben sog. MMICs (microwave monolithic integrated circuits) in dieses technische Gebiet Einzug gehalten. Diese MMICs zeichnen sich dadurch aus, dass Hochfrequenz-Schaltungen auf einem Chip platzsparend integriert sind. Üblicherweise sind diese MMICs rein auf die Erzeugung und Verarbeitung von Hochfrequenzsignalen ausgerichtet. In der Applikation für qualitativ hochwertige Automobilradars ist es jedoch erforderlich, dass spezifische Überwachungsfunktionen integriert sind. Erst dadurch ist es möglich, einen sicheren Betrieb zu gewährleisten, dass die Funktionsfähigkeit der Hochfrequenz-MMICs ständig während des Betriebes verifiziert wird. Dies ist bei bekannten Ansätzen mit GaAs-Chips nicht gegeben.

Eine besonders wichtige Überwachungsfunktion ist die Kontrolle der Temperatur eines MMIC. In bestimmten Betriebszuständen kann es passieren, dass die Temperatur des MMIC den spezifizierten Grenzwert überschreitet. Damit ist die korrekte Funktion des Radars nicht mehr gewährleistet, und entsprechende Sicherheitsmaßnahmen müssen während des Betriebs getroffen werden.

Typischerweise wird ein integrierter Temperatursensor zusammen mit der Versorgungsspannung eines MMIC aktiv. Dabei misst der Temperatursensor immer eine temperaturabhängige Spannung, die einer undefinierten Temperatur entspricht, da die tatsächliche Temperatur trotz bekannter Umgebungstemperatur nicht definiert ist. Damit ist es bei den bekannten Ansätzen unmöglich, den Temperatursensor zu kalibrieren.

Aus der DE 198 39 979 A1 ist eine Einrichtung zum Messen der Temperatur einer integrierten Schaltung bekannt. Ein Temperatursensor ist direkt auf einem Substrat platziert, welches die integrierte Schaltung enthält, deren Temperatur von Interesse ist. Eine Verarbeitungsschaltung zum Verarbeiten der Temperatursignale befindet sich auf einem getrennten Substrat.

Die WO 01/18512 A1 beschreibt einen Temperatursensorschaltkreis zum Erzeugen einer Ausgabespannung proportional zu einer Temperatur.

Die US 2008/061865 A1 beschreibt eine Vorrichtung und ein Verfahren zum Bereitstellen eines temperaturabhängigen Ausgabesignals.

Die US 2004/071183 A1 beschreibt einen integrierten digitalen Temperatursensor.

### VORTEILE DER ERFINDUNG

Das in Anspruch 1 definierte erfindungsgemäße Verfahren zur Erfassung der Temperatur einer integrierten Schaltung mittels einer auf einem gemeinsamen Substrat untergebrachten kalibrierbaren Temperaturerfassungseinrichtung und die entsprechende Vorrichtung gemäß Anspruch 5 sowie die Radarvorrichtung gemäß Anspruch 8 bieten gegenüber herkömmlichen Lösungen den Vorteil, dass ein Temperatursensor in dem Substrat der integrierten Schaltung integriert ist, wobei der Sensor und die integrierte Schaltung derart betreibbar sind, dass eine verlässliche applikationsnahe Temperaturmessung möglich ist. Zu diesem Zweck besitzt der integrierte Temperatursensor eine eigene Stromversorgung und eine externe Signalverarbeitungsschaltung, wobei eine Stromversorgung der integrierten Schaltung, deren Temperatur zu messen ist, während der Kalibrierungsphase des integrierten Temperatursensors ausschaltbar ist. Der Stromverbrauch des Temperatursensors ist dabei zweckmäßigerweise so gering, dass der Betrieb des Temperatursensors allein zu keiner bzw. keiner wesentlichen Erhöhung der Chiptemperatur führt. Ist der nicht eingeschaltete Chip nun auf bekannter Temperatur und nur der Temperatursensor aktiv, so kann beispielsweise durch zwei Messungen bei verschiedenen Temperaturen eine lineare Temperaturkennlinie des Sensors bestimmt werden. Steigung und Offset einer derartigen linearen Temperaturkennlinie lassen sich von der externen Signalverarbeitungsvorrichtung ermitteln und in einem Speicher der externen Signalverarbeitungsvorrichtung ablegen, wodurch eine kalibrierte Temperaturmessung der eingeschalteten integrierten Schaltung jederzeit möglich ist.

Die in den jeweiligen Unteransprüchen aufgeführten Merkmale beziehen sich auf vorteilhafte Weiterbildungen und Verbesserungen des Gegenstandes der Erfindung.

Gemäß einer bevorzugten Weiterbildung umfasst das Kalibrieren folgende Schritte:
Temperieren der ausgeschalteten integrierten Schaltung auf eine erste Temperatur;
Erfassen einer ersten temperaturabhängigen Kenngröße der Temperaturerfassungseinrichtung bei der ersten Temperatur mittels der externen Signalverarbeitungsschaltung;
Temperieren der ausgeschalteten integrierten Schaltung auf eine zweite Temperatur, welche von der ersten Temperatur verschieden ist;
Erfassen einer zweiten temperaturabhängigen Kenngröße der Temperaturerfassungseinrichtung bei der zweiten Temperatur mittels der externen Signalverarbeitungsschaltung; und
Bestimmen und Speichern der Temperaturabhängigkeit anhand der ersten und zweiten erfassten temperaturabhängigen Kenngröße mittels der externen Signalverarbeitungsschaltung.

Gemäß einer weiteren bevorzugten Weiterbildung umfasst die Temperaturerfassungseinrichtung eine Diodeneinrichtung, wobei die erste und zweite erfasste temperaturabhängigen Kenngröße Flußspannungen sind und wobei die Temperaturabhängigkeit in Form einer linearen Temperaturkennlinie ermittelt und gespeichert wird.

Gemäß einer weiteren bevorzugten Weiterbildung weist die integrierte Schaltung eine MMIC-Schaltung auf.

Gemäß einer weiteren bevorzugten Weiterbildung ist die integrierte Schaltung Bestandteil einer Radarvorrichtung eines Kraftfahrzeuges.

### ZEICHNUNGEN

Ein Ausführungsbeispiel der Erfindung ist in der Zeichnung dargestellt und in der nachfolgenden Beschreibung näher erläutert.

Es zeigen
- Fig. 1: ein Blockdiagramm einer Vorrichtung zur Erfassung der Temperatur einer integrierten Schaltung mittels einer auf einem gemeinsamen Substrat untergebrachten kalibrierbaren Temperaturerfassungseinrichtung gemäß einer Ausführungsform der vorliegenden Erfindung; und
- Fig. 2: ein Fließdiagramm eines Verfahrens zur Erfassung der Temperatur einer integrierten Schaltung mittels einer auf einem gemeinsamen Substrat untergebrachten kalibrierbaren Temperaturerfassungseinrichtung gemäß der Ausführungsform der vorliegenden Erfindung.

### AUSFÜHRUNGSFORMEN DER ERFINDUNG

In den Figuren bezeichnen gleiche Bezugszeichen gleiche bzw. funktionsgleiche Elemente.

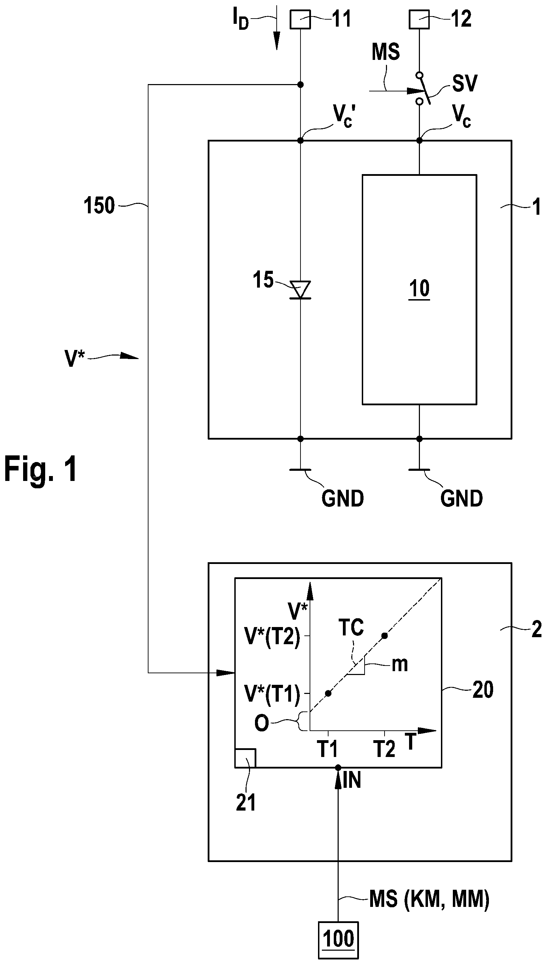

Fig. 1 ist ein Blockdiagramm einer Vorrichtung zur Erfassung der Temperatur einer integrierten Schaltung mittels einer auf einem gemeinsamen Substrat untergebrachten kalibrierbaren Temperaturerfassungseinrichtung gemäß einer Ausführungsform der vorliegenden Erfindung.

In Fig. 1 bezeichnet Bezugszeichen 1 ein Substrat in Form eines Halbleiterchips, in den eine integrierte Hochfrequenz-MMIC-Schaltung 10 für einen Radarsensor eines Kraftfahrzeuges eingebettet ist. V_{c} bezeichnet einen Stromversorgungsanschluss für die MMIC-Schaltung 10, welcher mittels eines steuerbaren Schalters SV mit einer Stromquelle 12 für die MMIC-Schaltung verbindbar bzw. davon trennbar ist.

Ebenfalls integriert in den Chip 1 ist eine Temperaturerfassungseinrichtung 15 in Form einer integrierten Halbleiterdiode oder einer Basis-Emitterstrecke eines Transistors. V_{c}' bezeichnet einen separaten Stromversorgungsanschluss der Temperaturerfassungseinrichtung 15, der mit einer Stromquelle 11 verbunden ist, mittels derer ein Konstantstrom I_{D} in die Temperaturerfassungseinrichtung 15 einprägbar ist. Der separate Anschluss V_{c}' versorgt ausschließlich den Temperatursensor 15 und ist auch dann zugeschaltet, wenn die integrierte Schaltung 10 bei geschlossenem Schalter SV in Betrieb ist. Mittels einer Verbindungsleitung 150 ist eine bei dem Konstantstrom I_{D} abfallende Flussspannung V* über der Halbleiterdiode abgreifbar. GND bezeichnet in Fig. 1 ein Massepotential der Temperaturerfassungseinrichtung 15 und der MMIC-Schaltung 10.

Es ist bekannt, dass die Flussspannung V* einer derartigen Temperaturerfassungseinrichtung 15 proportional zur Temperatur ist, welche an der Stelle des PN-Übergangs der Temperaturerfassungseinrichtung 15 herrscht und somit zur Erfassung der tatsächlichen Temperatur des Chips 1 herangezogen werden kann.

Die über die Verbindungsleitung 150 abgegriffene Flussspannung V* wird einer Signalverarbeitungsschaltung 20 zugeführt, welche auf einem separaten Chip 2 integriert ist. Die Signalverarbeitungsschaltung 20, welche eine Speichereinrichtung 21 aufweist, kann in zwei Modi arbeiten, einem Kalibriermodus KM und einem normalen Temperaturerfassungsmodus MM. Eine Modusauswahleinrichtung 100 dient zum Erzeugen eines jeweiligen Modussignals MS entsprechend dem Kalibriermodus KM und entsprechend einem Meßmodus MM, welches einem Eingangsanschluss IN der Signalverarbeitungsschaltung 20 und dem Steueranschluß des Schalters SV zuführbar ist.

Die Signalverarbeitungsschaltung 20 ist ansprechend auf das Modussignal MS entsprechend dem Kalibriermodus KM zum Bestimmen und Speichern der Temperaturabhängigkeit der Temperaturerfassungseinrichtung 15 aktivierbar, wobei gleichzeitig durch den Schalter SV die Stromversorgung 12 der integrierten Schaltung 10 ausschaltbar ist.

In dem Kalibriermodus KM wird bei der hier beschriebenen Ausführungsform eine lineare Temperaturkennlinie TC der Temperaturerfassungseinrichtung 15 von der Signalverarbeitungsschaltung 20 anhand einer ersten und zweiten erfassten temperaturabhängigen Flußspannung V*(T1), V*(T2) bei Temperaturen T1 bzw. T2 festgelegt, welche durch eine Steigung m und einen Offset O gekennzeichnet ist. Mittels dieser festgelegten linearen Temperaturkennlinie TC lässt sich im normalen Temperaturerfassungsmodus MM bei zugeschalteter Stromversorgung 12 der MMIC-Schaltung 10 zu jeder erfassten Flussspannung V* (T) die entsprechende Temperatur T ermitteln.

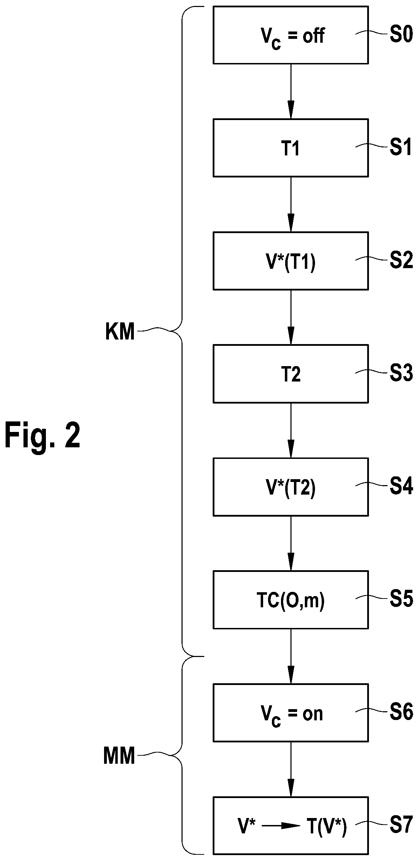

Fig. 2 ist ein Fließdiagramm eines Verfahrens zur Erfassung der Temperatur einer integrierten Schaltung mittels einer auf einem gemeinsamen Substrat untergebrachten kalibrierbaren Temperaturerfassungseinrichtung gemäß der Ausführungsform der vorliegenden Erfindung.

Gemäß Fig. 2 wird in Schritt S0 im Kalibriermodus die Stromversorgung 12 der integrierten MMIC-Schaltung 10 mittels des durch das Modussignal MS steuerbaren Schalters SV unterbrochen, also die integrierte Schaltung 10 derart deaktiviert, so dass sie keine Wärme produziert.

Im darauffolgenden Schritt S1 wird eine externe Temperatur T1 an den Chip 1 mit der integrierten MMIC-Schaltung 10 angelegt, beispielsweise in einer Klimakammer. Darauf folgend wird im Schritt S2 die Flussspannung V*(T1) bei der angelegten Temperatur T1 mittels der Signalverarbeitungsschaltung 2 bestimmt und in einem Speicher 21 abgelegt.
Im Schritt S3 wird eine Temperatur T2 an den Chip 1 mit der integrierten MMIC-Schaltung 10 angelegt, welche höher als die Temperatur T1 ist. Darauf folgend wird im Schritt S4 die zur Temperatur T2 gehörige Flussspannung V*(T2) der Temperaturerfassungseinrichtung 15 durch die Signalverarbeitungsschaltung 2 bestimmt und ebenfalls im Speicher 21 abgelegt.

Im Anschluss daran berechnet die Signalverarbeitungsschaltung 2 nach dem Regressionsprinzip in Schritt S5 eine lineare Temperaturkennlinie TC der Temperaturerfassungseinrichtung 15, welche durch ihre Steigung m und ihren Offset O charakterisiert ist. Die entsprechenden Größen werden ebenfalls im Speicher 21 abgelegt. Somit ist der Kalibriermodus KM mit der Durchführung des Schrittes S5 beendet.

Im Anschluss daran geht die Schaltungsanordnung in den normalen Messmodus MM, wobei zunächst im Schritt S6 die Stromversorgung 12 der integrierten MMIC-Schaltung 10 im Chip 1 eingeschaltet wird. Im Anschluss daran kann die Signalverarbeitungsschaltung 20 in vorgegebenen Zeitabständen im Schritt S7 die Flussspannung V*(T) über der Temperaturerfassungseinrichtung 15 erfassen und mittels der gespeicherten Temperaturkennlinie TC einer jeweiligen Temperatur T(V*) zuordnen.

Obwohl die vorliegende Erfindung vorstehend anhand bevorzugter Ausführungsbeispiele beschrieben wurde, ist sie darauf nicht beschränkt, sondern auf vielfältige Weise modifizierbar.

Insbesondere ist die Erfindung nicht auf die Bestimmung einer linearen Temperaturkennlinie anhand von zwei Stützpunkten begrenzt, sondern für beliebige Temperaturabhängigkeiten mit beliebiger Anzahl von Stützpunkten geeignet.

## Patentansprüche

1. Verfahren zur Erfassung der Temperatur einer integrierten Schaltung (10) mittels einer auf einem gemeinsamen Substrat (1) untergebrachten kalibrierbaren Temperaturerfassungseinrichtung (15) mit den Schritten:
Kalibrieren der kalibrierbaren Temperaturerfassungseinrichtung (15) und Speichern einer entsprechenden Temperaturabhängigkeit mittels einer externen Signalverarbeitungsschaltung (20, 21), wobei eine Stromversorgung (12) der integrierten Schaltung (10) ausgeschaltet ist und die kalibrierbare Temperaturerfassungseinrichtung (15) über eine separate Stromversorgung (11) betrieben wird, welche an einen separaten Stromversorgungsanschluss (V_{c}') der Temperaturerfassungseinrichtung (15) angelegt wird, welcher ausschließlich die Temperaturerfassungseinrichtung (15) versorgt und auch dann zugeschaltet ist, wenn die Stromversorgung (12) der integrierten Schaltung (10) eingeschaltet ist;
Betreiben der integrierten Schaltung (10), wobei die Stromversorgung (12) der integrierten Schaltung (10) eingeschaltet ist;
Erfassen der Temperatur der integrierten Schaltung (10) während des Betriebs der integrierten Schaltung (10) mittels der Temperaturerfassungseinrichtung (15) unter Verwendung der gespeicherten Temperaturabhängigkeit.

2. Verfahren nach Anspruch 1, wobei das Kalibrieren folgende Schritte aufweist:
Temperieren der ausgeschalteten integrierten Schaltung (10) auf eine erste Temperatur (T1);
Erfassen einer ersten temperaturabhängigen Kenngröße (V*(T1)) der Temperaturerfassungseinrichtung (15) bei der ersten Temperatur (T1) mittels der externen Signalverarbeitungsschaltung (20, 21);
Temperieren der ausgeschalteten integrierten Schaltung (10) auf eine zweite Temperatur (T2), welche von der ersten Temperatur (T1) verschieden ist;
Erfassen einer zweiten temperaturabhängigen Kenngröße (V*(T2)) der Temperaturerfassungseinrichtung (15) bei der zweiten Temperatur (T2) mittels der externen Signalverarbeitungsschaltung (20, 21); und
Bestimmen und Speichern der Temperaturabhängigkeit anhand der ersten und zweiten erfassten temperaturabhängigen Kenngröße (V*(T1); V*(T2)) mittels der externen Signalverarbeitungsschaltung (20, 21).

3. Verfahren nach Anspruch 2, wobei die Temperaturerfassungseinrichtung (15) eine Diodeneinrichtung (15) umfasst, die erste und zweite erfasste temperaturabhängigen Kenngröße (V*(T1); V*(T2)) Flussspannungen sind und die Temperaturabhängigkeit in Form einer linearen Temperaturkennlinie (TC) ermittelt und gespeichert wird.

4. Verfahren nach einem der vorhergehenden Ansprüche, wobei die integrierte Schaltung (10) eine MMIC-Schaltung aufweist.

5. Vorrichtung zur Erfassung der Temperatur einer integrierten Schaltung (10) mittels einer auf einem gemeinsamen Substrat (1) untergebrachten kalibrierbaren Temperaturerfassungseinrichtung (15) mit:
einer externen Signalverarbeitungsschaltung (20, 21), welche eine Speichereinrichtung (21) aufweist, zum Erfassen der Temperatur der integrierten Schaltung (10) während des Betriebs der integrierten Schaltung (10) unter Verwendung einer in einer Speichereinrichtung (21) gespeicherten Temperaturabhängigkeit; und
einer Modusauswahleinrichtung (100) zum Erzeugen eines jeweiligen Modussignals (MS) entsprechend einem Kalibriermodus (KM) und entsprechend einem Messmodus (MM);
wobei die externe Signalverarbeitungsschaltung (20, 21) ansprechend auf das Modussignal (MS) entsprechend dem Kalibriermodus (KM) zum Bestimmen und Speichern der Temperaturabhängigkeit aktivierbar ist und eine Stromversorgung (12) der integrierten Schaltung (10) ausschaltbar ist; und
wobei die Temperaturerfassungseinrichtung (15) einen separaten Stromversorgungsanschluss (V_{c}') aufweist, welcher ausschließlich die Temperaturerfassungseinrichtung (15) versorgt und auch dann zugeschaltet ist, wenn die Stromversorgung (12) der integrierten Schaltung (10) eingeschaltet ist.

6. Vorrichtung nach Anspruch 5, wobei die Temperaturerfassungseinrichtung (15) eine Diodeneinrichtung (15) aufweist.

7. Vorrichtung nach einem der Ansprüche 5 oder 6, wobei die integrierte Schaltung (10) eine MMIC-Schaltung aufweist.

8. Radarvorrichtung für ein Kraftfahrzeug, welche eine integrierte Schaltung (10) nach einem der Ansprüche 5 bis 7 umfasst.

## Claims

1. Method for recording the temperature of an integrated circuit (10) by means of a calibratable temperature recording device (15) accommodated on a shared substrate (1), comprising the steps of:
calibrating the calibratable temperature recording device (15) and storing a corresponding temperature dependence by means of an external signal processing circuit (20, 21), a power supply (12) to the integrated circuit (10) being switched off and the calibratable temperature recording device (15) being operated by means of a separate power supply (11), which is applied to a separate power supply terminal (V_{c}') of the temperature recording device (15), which exclusively supplies the temperature recording device (15) and is also activated when the power supply (12) of the integrated circuit (10) is switched on;
operating the integrated circuit (10), the power supply (12) of the integrated circuit (10) being switched on;
recording the temperature of the integrated circuit (10) during the operation of the integrated circuit (10) by means of the temperature recording device (15) by using the stored temperature dependence.

2. Method according to Claim 1, the calibration comprising the following steps:
controlling the temperature of the switched-off integrated circuit (10) to a first temperature (T1);
recording a first temperature-dependent characteristic variable (V*(T1)) of the temperature recording device (15) at the first temperature (T1) by means of the external signal processing circuit (20, 21);
controlling the temperature of the switched-off integrated circuit (10) to a second temperature (T2), which is different from the first temperature (T1);
recording a second temperature-dependent characteristic variable (V*(T2)) of the temperature recording device (15) at the second temperature (T2) by means of the external signal processing circuit (20, 21); and
determining and storing the temperature dependence on the basis of the first and second recorded temperature-dependent characteristic variables (V*(T1); V*(T2)) by means of the external signal processing circuit (20, 21).

3. Method according to Claim 2, the temperature recording device (15) comprising a diode device (15), the first and second recorded temperature-dependent characteristic variables (V*(T1); V*(T2)) being forward voltages and the temperature dependence being determined and stored in the form of a linear temperature characteristic (TC).

4. Method according to one of the preceding claims, the integrated circuit (10) comprising an MMIC circuit.

5. Device for recording the temperature of an integrated circuit (10) by means of a calibratable temperature recording device (15) accommodated on a shared substrate (1), comprising:
an external signal processing circuit (20, 21), which has a storage device (21), for recording the temperature of the integrated circuit (10) during the operation of the integrated circuit (10) by using a temperature dependence stored in a storage device (21); and
a mode selection device (100) for generating a respective mode signal (MS) corresponding to a calibrating mode (KM) and corresponding to a measuring mode (MM);
wherein the external signal processing circuit (20, 21) can be activated in response to the mode signal (MS) in a way corresponding to the calibrating mode (KM) for determining and storing the temperature dependence and a power supply (12) to the integrated circuit (10) can be switched off; and
wherein the temperature recording device (15) has a separate power supply terminal (V_{c}'), which exclusively supplies the temperature recording device (15) and is also activated when the power supply (12) of the integrated circuit (10) is switched on.

6. Device according to Claim 5, the temperature recording device (15) comprising a diode device (15).

7. Device according to either of Claims 5 and 6, the integrated circuit (10) comprising an MMIC circuit.

8. Radar device for a motor vehicle, which comprises an integrated circuit (10) according to one of Claims 5 to 7.

## Revendications

1. Procédé de détection de la température d'un circuit intégré (10) au moyen d'un dispositif de détection de température (15) étalonnable implanté sur un substrat (1) commun, comprenant les étapes suivantes :
étalonnage du dispositif de détection de température (15) étalonnable et mise en mémoire d'une dépendance à la température correspondante au moyen d'un circuit de traitement de signal (20, 21) externe, une alimentation électrique (12) du circuit intégré (10) étant déconnectée et le dispositif de détection de température (15) étalonnable fonctionnant par le biais d'une alimentation électrique séparée (11), laquelle est appliquée à une borne d'alimentation électrique (Vc') séparée du dispositif de détection de température (15), laquelle alimente exclusivement le dispositif de détection de température (15) et est également mise en circuit lorsque l'alimentation électrique (12) du circuit intégré (10) est connectée ;
mise en fonctionnement du circuit intégré (10), l'alimentation électrique (12) du circuit intégré (10) étant connectée ;
détection de la température du circuit intégré (10) pendant le fonctionnement du circuit intégré (10) au moyen du dispositif de détection de température (15) en utilisant la dépendance à la température mise en mémoire.

2. Procédé selon la revendication 1, l'étalonnage comprenant les étapes suivantes :
thermostatisation du circuit intégré (10) hors tension à une première température (T1) ;
acquisition d'une première grandeur caractéristique dépendante de la température (V*(T1)) du dispositif de détection de température (15) à la première température (T1) au moyen du circuit de traitement de signal (20, 21) externe ;
thermostatisation du circuit intégré (10) hors tension à une deuxième température (T2) qui est différente de la première température (T1) ;
acquisition d'une deuxième grandeur caractéristique dépendante de la température (V*(T2)) du dispositif de détection de température (15) à la deuxième température (T2) au moyen du circuit de traitement de signal (20, 21) externe ; et
détermination et mise en mémoire de la dépendance à la température à l'aide des première et deuxième grandeurs caractéristiques dépendantes de la température (V*(T1) ; V*(T2)) acquises au moyen du circuit de traitement de signal (20, 21) externe.

3. Procédé selon la revendication 2, le dispositif de détection de température (15) comprenant un dispositif à diodes (15), les première et deuxième grandeurs caractéristiques dépendantes de la température (V*(T1) ; V*(T2)) étant des tensions de flux et la dépendance à la température étant déterminée et mise en mémoire sous la forme d'une courbe caractéristique de température linéaire (TC).

4. Procédé selon l'une des revendications précédentes, le circuit intégré (10) possédant un circuit MMIC.

5. Système de détection de la température d'un circuit intégré (10) au moyen d'un dispositif de détection de température (15) étalonnable implanté sur un substrat (1) commun, comprenant :
un circuit de traitement de signal (20, 21) externe qui possède un dispositif de mémorisation (21), destiné à détecter la température du circuit intégré (10) pendant le fonctionnement du circuit intégré (10) en utilisant une dépendance à la température mise en mémoire dans le dispositif de mémorisation (21) ; et
un dispositif de sélection de mode (100) destiné à générer un signal de mode (MS) respectif correspondant à un mode d'étalonnage (KM) et correspondant à un mode de mesure (MM) ;
le circuit de traitement de signal (20, 21) externe pouvant être activé en réaction au signal de mode (MS) correspondant au mode d'étalonnage (KM) pour déterminer et mettre en mémoire la dépendance à la température et une alimentation électrique (12) du circuit intégré (10) pouvant être déconnectée ; et
le dispositif de détection de température (15) possédant une borne d'alimentation électrique (Vc') séparée, laquelle alimente exclusivement le dispositif de détection de température (15) et est également mise en circuit lorsque l'alimentation électrique (12) du circuit intégré (10) est connectée.

6. Système selon la revendication 5, dispositif de détection de température (15) possédant un dispositif à diode (15).

7. Système selon l'une des revendications 5 ou 6, le circuit intégré (10) possédant un circuit MMIC.

8. Système radar pour un véhicule automobile, lequel comprend un circuit intégré (10)= selon l'une des revendications 5 à 7.
